# EUROPÄISCHE PATENTSCHRIFT

(11) **EP 0 895 902 B1**
(45) Veröffentlichungstag und Bekanntmachung des Hinweises auf die Patenterteilung: **03.04.2002**
(21) Anmeldenummer: 98114314.2
(22) Anmeldetag: 30.07.1998
(51) Int. Cl.: B60R 21/09

(54) **Sicherheitseinrichtung für die Lagerung von Pedalen in Kraftfahrzeugen**
Safety device for bearing of pedals for vehicles
Dispositif de sécurité pour palier de pédales pour véhicules automobiles

(30) Priorität: 03.08.1997 DE 19733512; 27.08.1997 DE 19737114
(43) Veröffentlichungstag der Anmeldung: 10.02.1999
(73) Patentinhaber: ED. Scharwächter GmbH, 42855 Remscheid (DE)
(72) Erfinder: Tiemann, Burkhard, 44807 Bochum (DE); Meese, Christoph, 50825 Köln (DE)
(74) Vertreter: Sparing, Rolf Klaus

(56) Entgegenhaltungen:
- DE-A- 3 533 420
- DE-A- 4 409 324
- DE-U- 9 217 184
- PATENT ABSTRACTS OF JAPAN vol. 097, no. 009, 30. September 1997 & JP 09 123948 A (TOYOTA MOTOR CORP), 13. Mai 1997 -& EP 0 788 931 A (TOYOTA JIDOSHA KABUSHIKI KAISHA)

## Beschreibung

Die Erfindung bezieht sich auf eine Sicherheitseinrichtung für die Lagerung von Pedalen in Kraftfahrzeugen, insbesondere Personenkraftfahrzeugen, nach der Präambel des Patentanspruchs 1.

Bei Auffahrunfällen besteht die Gefahr, daß durch Verformung des Vorderwagens im Bereich der Spritzwand angeordnete Teile, wie beispielsweise das Lenkgetriebe oder die Bremseinrichtungen, vor allem der Bremskraftverstärker, nach hinten in Richtung auf den Fahrgastraum und insbesondere zunächst in Richtung auf den Fahrer verlagert werden.
Daher sind bereits verschiedene Konstruktionsvorschläge, im Bereich des Fahrersitzes des Fahrzeuges angeordnete Bedienungseinrichtungen im Falle eines Unfalles und insbesondere bei einer Frontalkollision des Fahrzeuges möglichst aus dem Bereich des Fahrers herauszubewegen, bekannt. Nach dem Vorschlag der DE-A-33 37 232 ist in diesem Zusammenhang eine Einrichtung vorgesehen, die beim Auftreten unfallbedingter Relativbewegungen von innerhalb des Motorraumes angeordneten Bauteilen, beispielsweise des Motors des Fahrzeuges, die Lenksäule nebst Lenkrad in Richtung nach vorn vom Fahrer wegziehen soll, so daß eine Vergrößerung des Freiraumes im Brust und Kopfbereich des Fahrers erreicht wird.
Aus den im Gefolge von durch eine Frontalkollision bedingten Verformungen des Vorderwagens von Fahrzeugen resultiert auch eine nach hinten, d.h. zum Fahrer hin gerichtete Verlagerung sonstiger im Bereich der Spritzwand angeordneter Bedienungseinrichtungen des Fahrzeuges, vor allem der Pedalerie, welche den Fußraum im Bereich des Fahrersitzes so weit verringern kann, daß für den Fahrer eine Verletzungsgefahr, insbesondere durch die Pedalerie des Fahrzeuges entsteht. Dabei kann durch die Aufprallkräfte, insbesondere bei einem Bremspedal über die in einem Abstand zur Pedalachse am Pedalhebel angreifende Bremsstange ein Schwenkmoment in das Pedal eingeleitet werden, welches das Pedal entgegen seiner Betätigungsrichtung verschwenkt, was erhebliche Fußverletzungen bei dem das Pedal betätigenden Fahrer verursachen kann.
Aus der DE-C-28 41 988 ist bereits eine einen Pedalträger aufweisende Pedalerie bekannt, wobei der Pedalträger in seinem oberen Bereich mittels durch unfallbedingte Relativbewegungen der Bremseinrichtung lösbare Verbindungen an einem Querträger des Fahrzeuges befestigt ist, während an seinem unteren Bereich auch bei einem derartigen Unfall beständige Halterungen an anderen Fahrzeugteilen vorgesehen sind. Bei einem zu entsprechenden Verformungen des Vorderwagens führenden Unfall erfolgt demgemäß eine Verlagerung des Pedalträgers samt den Pedalen nach vorne und unten um eine Vergrößerung des Freiraumes für die Füße des Fahrers zu erreichen.
Aus der DE-A-39 04 616 ist weiterhin eine Anordnung zur Lagerung wenigstens eines Pedals bekannt, bei welcher ein an der Spritzwand befestigter Lagerbock mit einer an einem in einem fahrgastraumseitigen Abstand zu dieser angeordneten beigesetzten Querträger befestigten Auslenk-bzw. Ablenkvorrichtung zusammenwirkt, wobei die Auslenk-bzw. Ablenkvorrichtung derart ausgebildet ist, daß der durch einen Frontalaufprall des Fahrzeuges bewirkten in das Fahrzeug hinein gerichteten Verlagerung der Lagerbock-/Pedaleinheit eine Schwenkbewegung überlagert wird, so daß das oder die Pedale mit ihren unteren Endbereichen eine zur Spritzwand hin, nach vorn gerichtete Bewegung ausführen.
Die in diese Richtung zielenden bekannten Vorschläge ermöglichen zwar eine gewisse Verbesserung der Sicherheit im Bereich des Fußraumes vor dem Fahrersitz, können jedoch eine aus dem Verbleiben des Pedals im Fußraumbereich des Fahrers resultierende Restgefahr nicht ausschließen.

Die Erfindung geht aus von der DE-A-4 409 324. Diese zeigt ein Sicherheitsfußhebelwerk, welches über einen Aushebemechanismus für die Pedalachse verfügt. Der Aushebemechanismus besteht hierbei im wesentlichen aus einem Seil- oder Kettenzug der einenends mit der in einem radial offenen Lager gehaltenen Pedalachse und andrenends unter Zwischenschaltung von zwei Umlenkrollen mit einer karosseriefesten, am Lagerbock längsverschieblich geführten Stützstrebe verbunden ist. Die Umlenkrollen sind hierbei räumlich derart angeordnet, daß bei einer kollisionsbedingten Verlagerung der Spritzwand in den Fahrgastraum hinein über den Seil- oder Kettenzug eine nach obenziehende Kraft auf die Pedalachse einwirkt. Eine einwandfreie Funktion dieses Aushebemechanismus ist jedoch nur dann gegeben wenn der Verformungsweg der Spritzwand möglichst exakt in Längsrichtung der Stützstrebe erfolgt, da beispielsweise ein Kippbewegung des Lagerbockes gegenüber der Stützstrebe zu einem Verkanten der Stützstrebe mit der am Lagerbock angeordneten Führung für die Stützstrebe führen kann wodurch widerum der Aushebemechanismus blockiert wird.

Der Erfindung liegt die Aufgabe zugrunde,eine Pedalerie der eingangs genannten Anordnung zu schaffen, welche im Falle eines gefährlichen Auffahrunfalles einerseits eine Vergrößerung des Fußraumes sicherstellt, andererseits aber zugleich auch das Entstehen loser Teile ausschließt.

Diese Aufgabe wird erfindungsgemäß mit den kennzeichnenden Merkmalen des Patentanspruchs 1 gelöst.

Wenngleich die Befestigung des Lagerbockes und damit der Pedalachse an dem karosseriefesten Querträger gewisse Vorteile mit sich bringt, kann im Rahmen der Erfindung aber auch vorgesehen sein, daß der Lagerbock an der Spritzwand und die Aushebeeinrichtung an dem karosseriefesten Querträger befestigt ist. Wesentlich ist lediglich, daß sich im Falle einer Frontalkollision des Fahrzeuges Lagerbock und Aushebeeinrichtung derart relativ zueinander verlagern, daß die Pedalachse zwangsweise aus ihrer Lagerung ausgehoben wird.

In einer vorteilhaften Gestaltungsform ist vorgesehen, daß das im Lagerbock ausgebildete, die Pedalachse aufnehmende Lager einen nach oben offenen, vorzugsweise etwa U-förmigen Querschnitt aufweist und daß die Querschnittsöffnung des die Pedalachse lagernden Lagers betriebsmäßig durch einen die Lagerachse des Pedals übergreifenden bzw. am Heraustreten aus dem Lager hindernden Lagerteil verschlossen bzw. blockiert ist und daß die Ausbildung und Anordnung des die Lagerachse des Pedals übergreifenden Lagerteiles derart getroffen sind, daß es bei einer Frontalkollision durch die Aushebeeinrichtung selbsttätig entfernbar ist.

Vorteilhafterweise ist weiterhin vorgesehen, daß der entfernbare Lagerteil durch mindestens einen betriebsmäßig quer zur Längserstreckung der Pedalachse in das Lager eingreifenden Klips gebildet ist, welcher bei einer Frontalkollision durch die Aushebeeinrichtung zusammen mit der Pedalachse aus dem Lager herausziehbar ist.

Für die Wirkungsweise der erfindungsgemäßen Sicherheitseinrichtung ist es zwar ausreichend, daß die Aushebeeinrichtung durch ein die Pedalachse untergreifendes und in Richtung der Verlagerungsbewegung nach oben ansteigendes Element, im einfachsten Fall durch einen entsprechend beschnittenen Blechmaterialstreifen gebildet ist, zweckmäßigerweise ist aber vorgesehen, daß die Aushebeeinrichtung an ihrer Oberseite eine zur Spritzwand hin nach oben ansteigende Schrägfläche aufweist.

Eine vorteilhafte Einzelausgestaltung einer Sicherheitseinrichtung kann sich dadurch auszeichnen, daß der Lagerbock durch ein im Wesentlichen U-förmiges Blechpressteil gebildet und das die Pedalachse aufnehmende Lager durch in einem den Profilgrund überragenden Bereich seiner Profilschenkel angeordnete einen U-förmigen Querschnitt aufweisende Freischnitte gebildet ist und daß zugleich die Aushebeeinrichtung durch ein im Querschnitt U-förmiges Blechpressteil gebildet ist und zwischen die Profilschenkel des seinerseits als U-förmiges Blechpressteil ausgebildeten Lagerbockes eingreifend angeordnet ist.

In Verbindung mit einer derartigen Einzelausgestaltung der Sicherheitseinrichtung ist zweckmäßigerweise weiter vorgesehen, daß ein das entfernbare Lagerteil bildenden Klips durch eine im Querschnitt U-förmige Lagerschale gebildet und in seiner Betriebsstellung über wenigstens eine in eine entsprechende Ausnehmung bzw. Raste im Profilschenkel des Lagerbockes eingreifende Nase gesichert ist.

In eine weiteren äußertst vorteilhaften Variante der Sicherheitseinrichtung ist die Aushebeeinrichtung durch wenigstens eine einerseits gegen die Spritzwand abgestützte und andererseits die Lagerung der Pedalachse untergreifende Strebe gebildet.

Die die Aushebeeinrichtung bildende Strebe wirkt dabei als Hebel, welcher einerseits an der Spritzwand angelenkt ist und andererseits im Zuge einer nach oben gerichteten Schwenkbewegung ein Aushebeln der Lagerachse des oder der Pedale aus deren Lagerung erzwingt, falls sich eine Abstandsverringerung zwischen Spritzwand und der in einer radial offenen Ausnehmung im Lagerbock gehalterten Pedalachse ergibt, was regelmäßig nur im Falle eines Frontalaufpralles des Fahrzeuges auf ein Hindernis der Fall ist.

In einer bevorzugten Verwirklichungsform der Sicherheitseinrichtung ist vorgesehen, daß die die Aushebeeinrichtung bildende Strebe über ihre Länge hin als Hohlprofilteil, ausgehend von einer Befestigung an der Spritzwand zum Fahrgastraum hin nach oben ansteigend ausgerichtet, angeordnet ist, derart, daß sie an einem Ende vermittels eines zu dieser parallel abgewinkelten Endbereiches an der Spritzwand bzw. an einer an der Spritzwand befestigten Grundplatte eines Aggregates befestigt ist und am andern Ende an der Pedalachse mittels eines lagerschalenförmigen Endteiles anliegt. In zweckmäßigerweise ist das die Stebe bildende Hohlprofil im Bereich seiner Anbindung an die Spritzwand zu einem Fußteil gequetscht, so daß sich einerseits dessen Befestigung an der Spritzwand oder einem vergleichbaren ebenen Teil vereinfacht und gleichzeitig eine Soll-Biegestelle im Sinne einer vorgezeichneten Schwenklinie ergibt.

Vorzugsweise sind die Pedalachse und deren Lagerung in einer im Lagerbock ausgebildeten, einen nach oben offenen, vorzugsweise etwa U-förmigen Querschnitt aufweisenden Ausnehmung angeordnet und ein im Normalbetrieb des Fahrzeuges sicherndes Haltemittel, welches zwar die beim Betätigen des Pedals betriebsbedingt auftretenden Reaktionskräfte abstützt, bei einer Frontalkollision des Fahrzeuges jedoch im Zusammenwirken mit der sich relativ zum Lagerbock verlagernden, die Aushebeeinrichtung bildenden Strebe die Pedalachse freigibt, ist vorteilhaft durch ein als absprengbares Formteil ausgebildetes, an dem Rändern der die Pedalachse und deren Lagerung aufnehmenden Ausnehmung des Lagerbockes, insbesondere klemmend festlegbares Sicherungsteil gebildet.
Im weiteren ist noch vorgesehen, daß das das absprengbare bzw. entfernbare Haltemittel bildende Formteil durch mindestens einen betriebsmäßig quer zur Längserstreckung der Pedalachse in die das Lager aufnehmende U-förmige Ausnehmung des Lagerbockes eingreifenden Klips gebildet ist, welcher bei einer Frontalkollision durch die die Aushebeeinrichtung bildende Strebe zusammen mit der Pedalachse von der feststehenden Lagerhälfte abhebbar ist.

Schließlich besteht eine besonders vorteilhafte Anordnung der die Aushebeeinrichtung bildenden Strebe darin, daß deren Längsachse mit der Längsachse bzw. der Längserstreckung der eine U-förmige Querschnittsform aufweisenden, die Lagerung der Pedalachse aufnehmenden Ausnehmung des Lagerbockes einen Winkel von mehr als 90° einschließt.

Die Erfindung ist in der nachfolgenden Beispielsbeschreibung anhand eines in der Zeichnung dargestellten Ausführungsbeispieles im Einzelnen beschrieben.
- Fig.1: zeigt eine Seitenansicht einer im Fußbereich eines Fahrzeuges angeordneten Pedalaufhängung bei normalem Betrieb des Fahrzeuges; bei der die Aushebeeinrichtung durch ein die Pedalachse untergreifendes, an der Spritzwand befestigtes Blechformteil gebildet wird.
- Fig. 2: zeigt eine Draufsicht auf die Pedalaufhängung gemäß Fig.1;
- Fig. 3: zeigt eine Seitenansicht der Pedalaufhängung gemäß Fig. 1 nach einer Frontalkollision des Fahrzeuges;
- Fig. 4: zeigt eine Draufsicht auf die Pedalaufhängung gemäß Fig.3.
- Fig. 5: zeigt eine Seitenansicht einer im Fußbereich eines Fahrzeuges angeordneten Pedalaufhängung bei normalem Betrieb des Fahrzeuges; bei der die Aushebeeinrichtung durch eine einerseits gegen die Spritzwand abgestützte und andrerseits die Lagerung der Pedalachse untergreifende Strebe gebildet ist.
- Fig. 6: zeigt eine Seitenansicht der Pedalaufhängung gemäß Fig.5 nach einer Frontalkollision des Fahrzeuges.

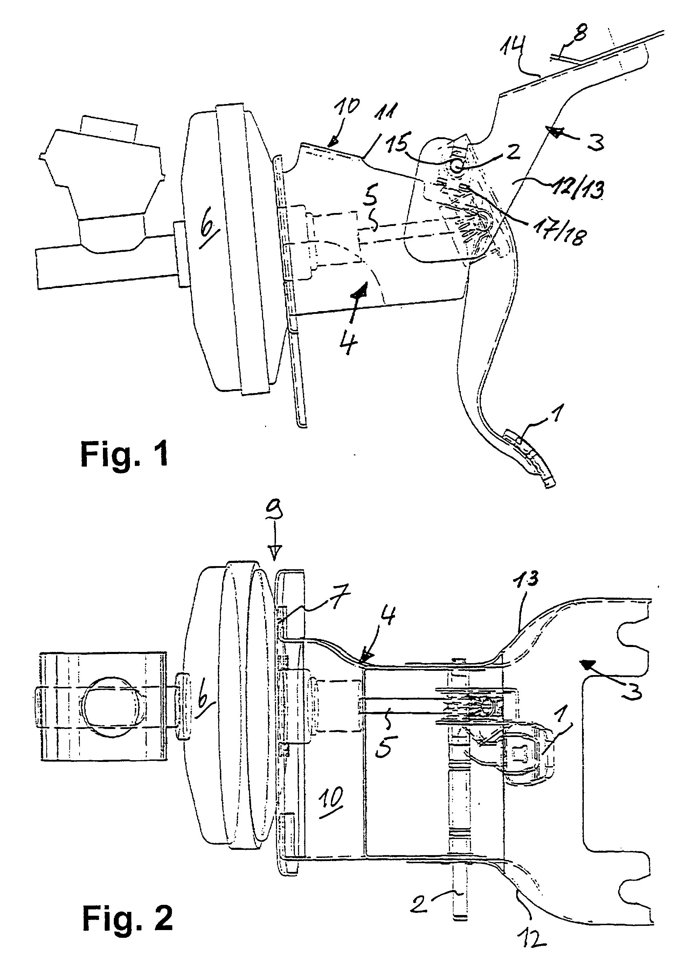

In den Zeichnungen sind lediglich die für das Verständnis der Erfindung erforderlichen Teile des Fußraumes des Fahrzeuges sowie der Pedalaufhängung dargestellt, wobei lediglich ein vermittels eines Druckstange 5; 23 mit einem Bremskraftverstärker 6; 24 zusammenwirkendes Bremspedal 1; 19 gezeigt ist.
Die in den Fig.1 bis 4 dargestellte Pedalaufhängung umfaßt im wesentlichen das Pedal 1, eine Pedalachse 2, einen die Pedalachse 2 lagernden Lagerbock 3 und eine der Pedalachse 2 zugeordnete Aushebeeinrichtung 4. Die Aushebeeinrichtung 4 ist durch ein im Querschnitt U-förmiges Blechpressteil gebildet, welches vermittels Fußteile 7 einem karosseriefesten Querträger 8 gegenüberliegend an dem sich bei einer Frontalkollision des Fahrzeuges spürbar in den Fahrgastraum hinein verformenden einer Wandbereich der Spritzwand 9 befestigt ist. Der mit der Pedalachse 2 zusammenwirkende Profilgrund des die Aushebeeinrichtung 4 bildenden U-förmigen Blechpressteiles bildet dabei eine gegen die Spritzwand 9 hin nach oben ansteigende Schrägfläche 10, die im gezeigten Ausführungsbeispiel wenigstens eine Stufe 11 aufweist. Die Aushebeeinrichtung 4 greift zwischen die beiden Profilschenkel 12 und 13 des seinerseits U-förmig gestalteten und vermittels seines Profilgrundes 14 am Querträger 8 befestigten Lagerbockes 3 in einer solchen Weise ein, daß die Schrägfläche 10 die Pedalachse 2 untergreift. Die Pedalachse 2 ist an den Profilgrund 14 des Lagerbockes 3 überragenden Bereichen seiner Profilschenkel 12 und 13 gelagert, wobei der die beim betriebsbedingten Betätigen des Pedals 1 auftretenden Reaktionskräfte abstützende des Lagers 15 durch je eine U-förmige, nach oben offene Ausnehmung in jedem der Profilschenkel 12 und 13 gebildet ist.

In der in den Fig.1 und 2 dargestellten normalen Betriebslage liegt die Pedalachse 2 auf dem Grunde der Lagerausnehmung 15 auf und ist in dieser Lage durch ein übergreifendes Lagerteil, welches in der gezeigten Ausführungsform durch einen Klips 16 gebildet ist, gehalten. Der Klips 16 übergreift die Pedalachse 2 und ist in seiner Normallage über mit Rastausnehmungen 17 in den Profilschenkeln 12 und 13 im Eingriff befindliche Rastnasen 18 gehalten.

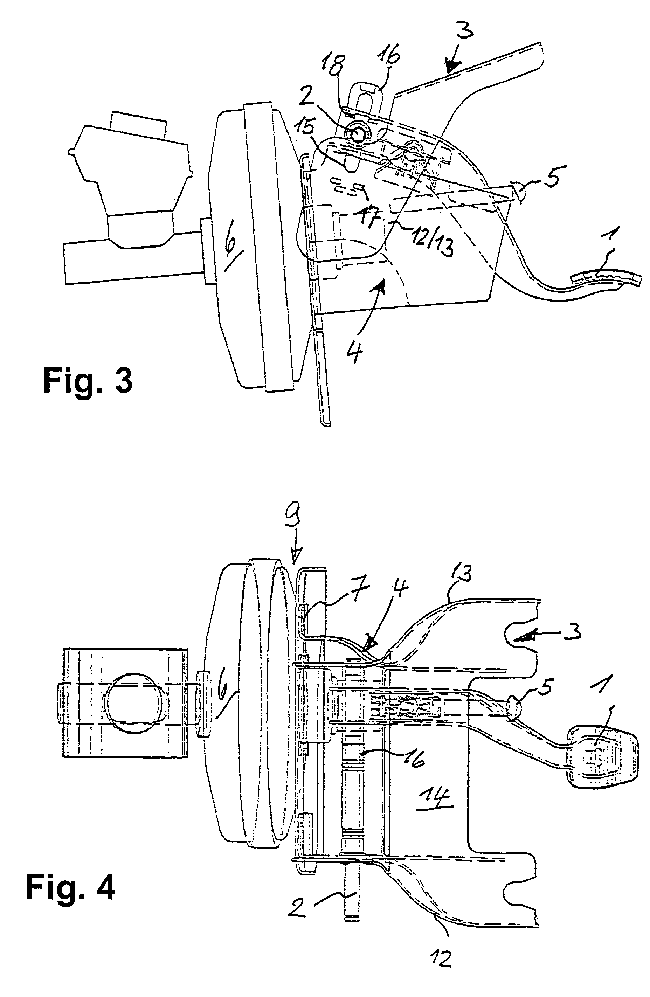

Bei einer Frontalkollision des Fahrzeuges kommt es zu einer Verformung des die Aushebeeinrichtung 4 tragenden Wandbereiches der Spritzwand und damit zu einer Relativbewegung der Aushebeeinrichtung 4 gegenüber dem an dem karosseriefesten Querträger befestigten Lagerbock, so daß ällmählich die in den Fig.3 und 4 dargestellte Lage der Aushebeeinrichtung 4 erreicht wird, in welcher die Pedalachse 2 durch die Schrägfläche 10 der Aushebeeinrichtung 4 aus den nach oben offenen Lager 15 ausgehoben und damit das Pedal 1 nach oben aus dem Fußraum des Fahrzeuges herausgehoben ist.

In der ausgehobenen Stellung liegt die Pedalachse 2 auf der Schrägfläche 10 der Aushebeeinrichtung 4 auf, so daß bei einer Frontalkollision des Fahrzeuges keine losen Einzelteile der Pedalerie entstehen können .

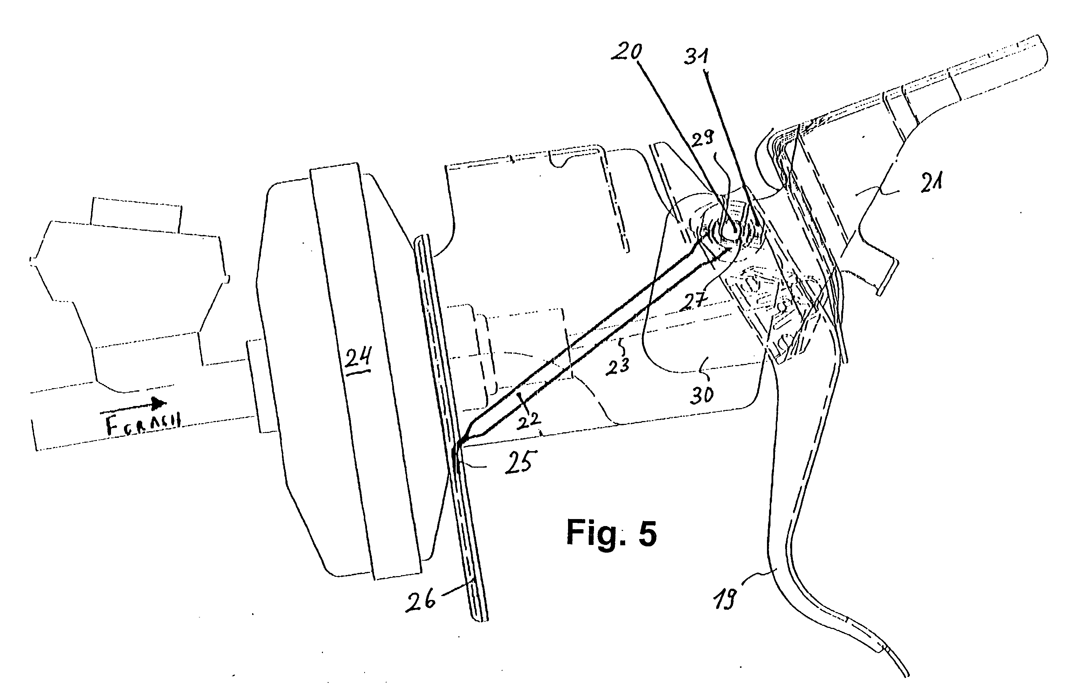

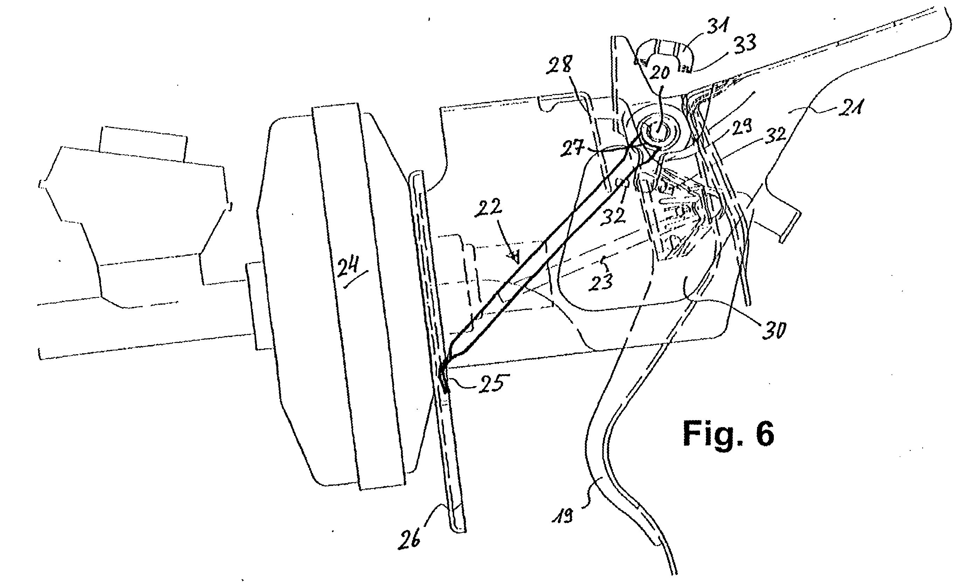

Die in den Fig.5 und 6 dargestellte Pedalaufhängung umfaßt im wesentlichen das Pedal 19, eine Pedalachse 20, einen die Pedalachse 20 lagernden Lagerbock 21 und eine der Pedalachse 20 zugeordnete Aushebeeinrichtung 22. Die Aushebeeinrichtung 22 ist durch eine als Hohlprofil gestaltete Strebe gebildet, welche vermittels eines in der gezeigten Ausführungsform durch eine Profilquetschung gebildeten Fußteiles 25 einem in der Zeichnung nicht besonders dargestellten, karosseriefesten Querträger gegenüberliegend an dem sich bei einer Frontalkollision des Fahrzeuges spürbar in den Fahrgastraum hinein verformenden Wandbereich der Spritzwand 26 befestigt ist. Das mit der Pedalachse 20 zusammenwirkende Ende 27 der die Aushebeeinrichtung 22 bildenden Strebe ist teilschalenförmig gestaltet und greift am Außenumfang des Pedallagers 28 an. Die Pedalachse 20 und deren Lager 28 sind in U-förmigen, nach oben offenen Ausnehmungen 29 der Profilschenkel 30 des Lagerbockes 21 aufgenommen und in dieser Stellung hinsichtlich der beim betriebsbedingten Betätigen des Pedals 19 auftretenden Reaktionskräfte durch ein als Formteil ausgebildetes Haltemittel 31 gesichert.

In der in der Fig.5 dargestellten normalen Betriebslage liegt die Pedalachse 20 auf dem Grunde der Lagerausnehmung 29 auf und ist in dieser Lage durch das übergreifende Haltemittel, welches in der gezeigten Ausführungsform durch einen Klips 31 gebildet ist, gehalten. Der Klips 31 übergreift die Pedalachse 20 und ist in seiner Normallage über mit Rastausnehmungen 32 in den Profilschenkeln 30 im Eingriff befindliche Rastnasen 33 gehalten. In dieser Stellung schließt die Längsachse der die Aushebeeinrichtung 22 bildenden Strebe mit der Längsachse bzw. der Längserstreckung der die Lagerung 28 der Pedalachse 20 aufnehmenden Ausnehmung 29 des Lagerbockes 21 einen Winkel von mehr als 90° ein.
Bei einer Frontalkollision des Fahrzeuges kommt es zu einer Verformung des die Aushebeeinrichtung 22 tragenden Wandbereiches der Spritzwand 26 und damit zu einer Relativbewegung der die Aushebeeinrichtung 22 bildenden Strebe gegenüber der im am karosseriefesten Querträger befestigten Lagerbock 21 gelagerten Pedalachse 20, so daß ällmählich die in der Fig.6 dargestellte Lage der Strebe 22 erreicht wird, in welcher die Pedalachse 20 durch die Aushebeeinrichtung 22 aus den nach oben offenen Ausnehmung 29 ausgehoben und damit das Pedal 19 nach oben aus dem Fußraum des Fahrzeuges herausgehoben ist. In der ausgehobenen Stellung liegt die Pedalachse 20 auf einer Schrägfläche 27 des Lagerbockes 30 auf, so daß bei einer Frontalkollision des Fahrzeuges keine losen Einzelteile der Pedalerie entstehen können.

## Patentansprüche

1. Sicherheitseinrichtung für die Lagerung von Pedalen in Kraftfahrzeugen, insbesondere Personenkraftfahrzeugen, mit einem im Bereich zwischen an einem sich bei einer Frontalkollision des Fahrzeuges spürbar in den Fahrgastraum hinein verformenden Wandbereich der Spritzwand (9) und einem fahrgastraumseitig in einem Abstand zu dem Wandbereich der Spritzwand verlaufenden, karosseriefesten Querträger (8), der seine räumliche Lage auch bei einer Frontalkollision im wesentlichen unverändert beibehält, angeordneten Lagerbock (3), in dem die Pedalachse (2) mindestens eines auf eine Druckstange (5) einwirkenden, schwenkbaren Pedals (1), insbesondere eines Bremspedals, gehaltert ist, und wobei
die Pedalachse (2) im Lagerbock (3) in einem radial offenen Lager (15) gehaltert ist, welches zwar die beim Betätigen des Pedals (1) betriebsbedingt auftretenden Reaktionskräfte abstützt, bei einer Frontalkollision des Fahrzeuges jedoch im Zusammenwirken mit einer sich relativ zum Lagerbock (3) verlagernden Aushebeeinrichtung (4) die Pedalachse (2) freigibt, **dadurch gekennzeichnet, daß** der Lagerbock (3) aus einem Blechformteil besteht und an dem karosseriefesten Querträger (8) befestigt ist und daß die Aushebeeinrichtung (4) durch ein die Pedalachse (2) untergreifendes, dem Lagerbock (3) gegenüberliegend an dem sich bei einer Frontalkollision des Fahrzeuges spürbar in den Fahrgastraum hinein verformenden Wandbereich der Spritzwand (9) befestigtes zweites Blechformteil gebildet ist.

2. Sicherheitseinrichtung nach Anspruch 1, **dadurch gekennzeichnet, daß** das im Lagerbock (3) ausgebildete, die Pedalachse (2) aufnehmende Lager (15) einen nach oben offenen, vorzugsweise etwa U-förmigen Querschnitt aufweist;
daß die Querschnittsöffnung des die Pedalachse (2) lagernden Lagers (15) betriebsmäßig durch einen die Lagerachse (2) des Pedals (1) übergreifenden bzw. am Heraustreten aus dem Lager (15) hindernden Lagerteil (16) verschlossen bzw. blockiert ist;
und daß der die Lagerachse (2) des Pedals (1) übergreifende Lagerteil (16) bei einer Frontalkollision durch die Aushebeeinrichtung (4) selbsttätig entfernbar ist.

3. Sicherheitseinrichtung nach Anspruch 2, **dadurch gekennzeichnet, daß** der entfernbare Lagerteil (16) durch mindestens einen betriebsmäßig quer zur Längserstreckung der Pedalachse in das Lager eingreifenden Klips (16) gebildet ist, welcher bei einer Frontalkollision durch die Aushebeeinrichtung zusammen mit der Pedalachse (2) aus dem Lager (15) herausziehbar ist.

4. Sicherheitseinrichtung nach einem der Ansprüche 1 bis 3, **dadurch gekennzeichnet, daß** die Aushebeeinrichtung (4) an ihrer Oberseite eine zur Spritzwand (9) hin nach oben ansteigende Schrägfläche (10) aufweist.

5. Sicherheitseinrichtung nach einem der Ansprüche 1 bis 4, **dadurch gekennzeichnet, daß** der Lagerbock (3) durch ein im Wesentlichen U-förmiges Blechpressteil gebildet und das die Pedalachse (2) aufnehmende Lager (15) durch in einem den Profilgrund (14) überragenden Bereich seiner Profilschenkel (12, 13) angeordnete, einen U-förmigen Querschnitt aufweisende Freischnitte gebildet ist.

6. Sicherheitseinrichtung nach einem der Ansprüche 1 bis 5, **dadurch gekennzeichnet, daß** die Aushebeeinrichtung (4) durch ein im Querschnitt U-förmiges Blechpressteil gebildet ist und zwischen die Profilschenkel (12, 13) des seinerseits als U-förmiges Blechpressteil ausgebildeten Lagerbockes (3) eingreifend angeordnet ist.

7. Sicherheitseinrichtung nach einem der Ansprüche 1 bis 6, **dadurch gekennzeichnet, daß** ein das entfernbare Lagerteil bildenden Klips (16) durch eine im Querschnitt U-förmige Lagerschale gebildet und in seiner Betriebsstellung über wenigstens eine in eine entsprechende Ausnehmung bzw. Raste im Profilschenkel des Lagerbockes (3) eingreifende Nase (18) gesichert ist.

8. Sicherheitseinrichtung nach einem der Ansprüche 1 bis 7, **dadurch gekennzeichnet, daß** die Aushebeeinrichtung (22) durch wenigstens eine einerseits gegen die Spritzwand (26) abgestützte und andererseits die Lagerung der Pedalachse (20) untergreifende Strebe gebildet ist.

9. Sicherheitseinrichtung nach Anspruch 8, **dadurch gekennzeichnet, daß** die die Aushebeeinrichtung bildende Strebe (22) ausgehend von einer Befestigung an der Spritzwand (26) zum Fahrgastraum hin nach oben ansteigend ausgerichtet angeordnet ist.

10. Sicherheitseinrichtung nach Anspruch 8 oder 9, **dadurch gekennzeichnet, daß** die Strebe (22) über ihre Länge hin als Hohlprofilteil gestaltet und an einem Ende vermittels eines zu dieser parallel abgewinkelten Endbereiches an der Spritzwand (26) bzw. an einer an der Spritzwand befestigten Grundplatte eines Aggregates befestigt ist und am anderen Ende der Pedalachse (20) mittels eines insbesondere lagerschalenförmigen Endteiles anliegt.

11. Sicherheitseinrichtung nach einem der Ansprüche 8 bis 10, **dadurch gekennzeichnet, daß** die Pedalachse (20) und deren Lagerung (28) in einer im Lagerbock ausgebildeten, einen nach oben offenen, vorzugsweise etwa U-förmigen Querschnitt aufweisenden Ausnehmung (29) angeordnet sind und die Pedalachse (20) und/oder deren Lagerung (28) betriebsmäßig durch ein als absprengbares Formteil ausgebildetes Haltemittel (31) in der Ausnehmung (29) des Lagerbockes (21) gesichert sind.

12. Sicherheitseinrichtung nach einem der Ansprüche 8 bis 11, **dadurch gekennzeichnet, daß** daß die Längsachse der die Aushebeeinrichtung bildenden Strebe (22) mit der Längsachse der eine U-förmige Querschnittsform aufweisenden die Pedalachse (20) und deren Lagerung (28) aufnehmenden Ausnehmung (29) des Lagerbockes (21) einen Winkel von mehr als 90° einschließt.

13. Sicherheitseinrichtung nach einem der Ansprüche 8 bis 12, **dadurch gekennzeichnet, daß** das die Pedalachse (20) bzw. deren Lagerung (28) betriebsmäßig in der Ausnehmung (29) des Lagerbockes (21) sichernde Haltemittel (31) durch mindestens einen betriebsmäßig quer zur Längserstreckung der Pedalachse (20) in die Ausnehmung (29) eingreifenden Klips gebildet ist, welcher bei einer Frontalkollision durch die Aushebeeinrichtung (22) zusammen mit der Pedalachse (20) aus der Ausnehmung (29) herausdrückbar ist.

## Claims

1. Safety device for the mounting of pedals in motor vehicles, in particular cars, with a bearing bracket (3) arranged in the region between a wall region of the splash wall (9) which deforms perceptibly into the passenger space in the event of a frontal collision of the vehicle and a cross member (8) which is rigid with the vehicle body, extends at a distance from the wall region of the splash wall on the passenger space side and keeps its three-dimensional position substantially unchanged even in the event of a frontal collision, in which bracket the pedal pivot shaft (2) of at least one pivotal pedal (1) acting on a spindle (5), in particular a brake pedal, is mounted and wherein the pedal pivot shaft (2) is mounted in the bearing bracket (3) in a radially open bearing (15) which supports the operation-induced reaction forces on actuation of the pedal (1) but releases the pedal pivot shaft (2) in cooperation with a lifting device (4) which moves relative to the bearing bracket (5) in the event of a frontal collision of the vehicle, **characterised in that** the bearing bracket (3) consists of a sheet metal shaped part and is fastened on the cross member (8) rigid with the vehicle body and **in that** the lifting device (4) is formed by a second sheet metal shaped part which extends below the pedal pivot shaft (2) and is fastened opposite the bearing bracket (3) on the wall region of the splash wall (9) which deforms perceptibly into the passenger space in the event of a frontal collision of the vehicle.

2. Safety device according to claim 1, **characterised in that** the bearing (15) formed in the bearing bracket (3) and accommodating the pedal pivot shaft (2) has a preferably substantially U-shaped cross-section open at the top; **in that** the cross-sectional aperture of the bearing (15) supporting the pedal pivot shaft (2) is operatively sealed or blocked by a bearing part (16) which extends over the bearing shaft (2) of the pedal (1) or prevents removal from the bearing (15); and **in that** the bearing part (16) extending over the bearing shaft (2) of the pedal (1) may be removed automatically by the lifting device (4) in the event of a frontal collision.

3. Safety device according to claim 2, **characterised in that** the removable bearing part (16) is formed by at least one clip (16) which engages operatively in the bearing transversely to the length of the pedal pivot shaft and may be removed from the bearing together with the pedal pivot shaft (2) by the lifting device in the event of a front collision.

4. Safety device according to any of claims 1 to 3, **characterised in that** the lifting device (4) has, on its upper side, an oblique face (10) which ascends upwardly toward the splash wall (9).

5. Safety device according to any of claims 1 to 4, **characterised in that** the bearing bracket (3) is formed by a substantially U-shaped sheet metal stamping and the bearing (15) accommodating the pedal pivot shaft (2) is formed by free punchings which are arranged in a region of their profile arms (12, 13) projecting beyond the base of the profile (14) and have a U-shaped cross-section.

6. Safety device according to any of claims 1 to 5, **characterised in that** the lifting device (4) is formed by a sheet metal stamping which is U-shaped in cross-section and is arranged so as to engage between the profile arms (12, 13) of the bearing bracket (3) which, in turn, is formed as a U-shaped sheet metal stamping.

7. Safety device according to any of claims 1 to 6, **characterised in that** a clip (16) forming the removable bearing part is formed by a bearing bush which is U-shaped in cross-section and the clip (16) is secured in its operating position via at least one projection (18) which engages in a corresponding recess or notch in the profile arm of the bearing bracket (3).

8. Safety device according to any of claims 1 to 7, **characterised in that** the lifting device (22) is formed by at least one strut which, at one end, is supported against the splash wall (26) and, at the other end, extends below the bearing for the pedal pivot shaft (20).

9. Safety device according to claim 8, **characterised in that** the strut (22) forming the lifting device is orientated so as to start from a fastening on the splash wall (26) and to extend upwardly toward the passenger space.

10. Safety device according to claim 8 or 9, **characterised in that** the strut (22) is constructed as a hollow profile part over its length and, at one end, is fastened by means of an end region bent parallel thereto on the splash wall (26) or on a base plate of a unit fastened on the splash wall and, at the other end, contacts the pedal pivot shaft (20) by means of an end part in the form, in particular, of a bearing bush.

11. Safety device according to any of claims 8 to 10, **characterised in that** the pedal pivot shaft (20) and its bearing (28) are arranged in a recess (29) which is formed in the bearing bracket, is open upwardly and preferably has a substantially U-shaped cross-section, and the pedal pivot shaft (20) and/or its bearing (28) are operatively secured in the recess (29) of the bearing bush (21) by a holding means (31) constructed as a severable shaped part.

12. Safety device according to any of claims 8 to 11, **characterised in that** the longitudinal axis of the strut (22) forming the lifting device encloses an angle greater than 90° with the longitudinal axis of the recess (29) of the bearing bracket (21) having a U-shaped cross-sectional shape and accommodating the pedal pivot shaft (20) and its bearing (28).

13. Safety device according to any of claims 8 to 12, **characterised in that** the holding means (31) operatively securing the pedal pivot shaft (20) or its bearing (28) in the recess (29) of the bearing bracket (21) is formed by at least one clip which engages operatively in the recess (29) transversely to the length of the pedal pivot shaft (20) and may be pressed from the recess (29) together with the pedal pivot shaft (20) by the lifting device (22) in the event of a frontal collision.

## Revendications

1. Dispositif de sécurité pour palier de pédales pour véhicules automobiles, en particulier des véhicules de tourisme, avec un étrier **(3)** placé dans la zone située entre une zone de paroi du tablier d'auvent **(9)** se déformant, de manière sensible, dans l'habitacle passager en cas de collision frontale du véhicule et un support transversal **(8)** solidaire de la carrosserie s'étendant côté habitacle à distance de la partie de paroi du tablier d'auvent et conservant sa position dans l'espace pratiquement sans changement en cas de collision frontale, étrier dans lequel est monté un axe de pédale **(2)** d'au moins une pédale **(1)** pivotante agissant sur une tige de poussée **(5)**, en particulier une pédale de frein, et dans lequel l'axe de pédale **(2)** est monté dans l'étrier **(3)** dans un palier ouvert radialement **(15),** qui supporte certes les forces de réaction apparaissant en service lors d'une action sur la pédale **(1),** mais libère l'axe de pédale **(2)** en cas de collision frontale du véhicule en coopération avec un dispositif de levage **(4)** se déplaçant par rapport à l'étrier **(3), caractérisé en ce que** l'étrier **(3)** est composé d'une pièce en tôle et est fixé sur le support transversal **(8)** solidaire de la carrosserie, et **en ce que** le dispositif de levage **(4)** est formé par une deuxième pièce en tôle saisissant l'axe de pédale **(2)** par le dessous et fixé du côté opposé à l'étrier **(3)** sur une zone de paroi du tablier d'auvent **(9)** se déformant sensiblement vers l'habitacle passagers en cas de collision frontale du véhicule.

2. Dispositif de sécurité selon la revendication 1, **caractérisé en ce que** le palier **(15)** formé dans l'étrier **(3)** et recevant l'axe de pédale **(2)** comporte une section ouverte vers le haut, de préférence approximativement en U, **en ce que** l'ouverture de section du palier **(15)** soutenant l'axe de pédale **(2)** est fermée ou bloquée par une partie de palier **(16)** enveloppant l'axe de palier **(2)** de la pédale **(1)** par le dessus, ou empêchant une sortie depuis le palier **(15),** et **en ce que** la partie de palier **(16)** saisissant l'axe de palier **(2)** de la pédale **(1)** par le dessus peut être éloigné automatiquement par le dispositif de levage **(4)** en cas de collision frontale.

3. Dispositif de sécurité selon la revendication 2, **caractérisé en ce que** la partie de palier **(16)** éloignable est formée d'au moins un clip **(16)** s'engageant en service dans le palier transversalement à l'extension longitudinale de l'axe de pédale, clip qui, en cas de collision frontale, est extractible depuis le palier **(15)** par le dispositif de levage en commun avec l'axe de pédale **(2)**.

4. Dispositif de sécurité selon l'une des revendications 1 à 3, **caractérisé en ce que** le dispositif de levage **(4)** présente, sur sa face supérieure, une surface inclinée **(10)** montant vers le haut en direction du tablier d'auvent **(9).**

5. Dispositif de sécurité selon l'une des revendications 1 à 4, **caractérisé en ce que** l'étrier **(3)** est formé d'une pièce en tôle pressée sensiblement en forme de U et le palier **(15)** recevant l'axe de pédale **(2)** est formé par des découpes placées dans une zone de sa branche de profilé **(12, 13)** dépassant du fond du profilé **(14)** et qui présentent une section transversale en U.

6. Dispositif de sécurité selon l'une des revendications 1 à 5, **caractérisé en ce que** le dispositif de levage **(4)** est formé d'une pièce en tôle pressée à section transversale en U et est placé en prise entre les branches de profilé **(12, 13)** de l'étrier **(3),** formé quant à lui d'une pièce en tôle pressée en U.

7. Dispositif de sécurité selon l'une des revendications 1 à 6, **caractérisé en ce qu'**un clip **(16)** formant la partie de palier éloignable est formé d'une coque de palier à section en U et est immobilisé dans sa position de service par l'intermédiaire d'un nez **(18)** se mettant en prise dans un évidement ou encliquetage correspondant prévu dans la branche de profilé de l'étrier **(3).**

8. Dispositif de sécurité selon l'une des revendications 1 à 7, **caractérisé en ce que** le dispositif de levage **(22)** est formé par au moins un étai appuyé d'une part contre le tablier d'auvent **(26)** et saisissant d'autre part le palier de l'axe de pédale **(20)** par le dessous.

9. Dispositif de sécurité selon la revendication 8, **caractérisé en ce que** l'étai **(22)** formant le dispositif de levage est disposé orienté vers le haut en direction de l'habitacle passagers en partant d'une fixation sur le tablier d'auvent **(26).**

10. Dispositif de sécurité selon la revendication 8 ou 9, **caractérisé en ce que** l'étai **(22)** est réalisé en profilé creux sur sa longueur et est fixé à une extrémité, au moyen d'une zone d'extrémité coudée parallèlement à celle-ci, sur le tablier d'auvent **(26)** ou sur une plaque de base d'un groupe fixée au tablier d'auvent, et s'appuie à l'autre extrémité contre l'axe de pédale **(20)** au moyen d'une partie d'extrémité, en particulier en forme de coque de palier.

11. Dispositif de sécurité selon l'une des revendications 8 à 10, **caractérisé en ce que** l'axe de pédale **(20)** et son support **(28)** sont placés dans un évidement **(29)** formé dans l'étrier et présentant une section transversale ouverte vers le haut, de préférence en forme de U, et l'axe de pédale **(20)** et/ou son support **(28)** sont immobilisés en service dans l'évidement **(29)** de l'étrier **(21)** par des moyens d'arrêt **(31)** réalisés en pièce moulée expulsable.

12. Dispositif de sécurité selon l'une des revendications 8 à 11, **caractérisé en ce que** l'axe longitudinal de l'étai **(22)** formant le dispositif de levage délimite un angle de plus de 90° avec l'axe longitudinal de l'évidement **(29)** de l'étrier **(21)** présentant une section transversale en U et recevant l'axe de pédale **(20)** et son support **(28).**

13. Dispositif de sécurité selon l'une des revendications 8 à 12, **caractérisé en ce que** le moyen d'arrêt **(31)** immobilisant l'axe de pédale **(20)** ou son support **(28)** en service dans l'évidement **(29)** de l'étrier **(21)** est formé par au moins un clip s'engageant en service dans l'évidement **(29)** transversalement à l'extension longitudinale de l'axe de pédale **(20),** clip qui peut être extrait de l'évidement **(29)** par le dispositif de levage **(22)** en commun avec l'axe de pédale **(20)** lors d'une collision frontale.
